# EUROPÄISCHE PATENTSCHRIFT

(11) **EP 4 108 544 B1**
(45) Veröffentlichungstag und Bekanntmachung des Hinweises auf die Patenterteilung: **11.06.2025**
(21) Anmeldenummer: 22166693.6
(22) Anmeldetag: 05.04.2022
(51) Int. Cl.: B62D 6/00

(54) **STEER-BY-WIRE-LENKUNG FÜR EIN KRAFTFAHRZEUG**
STEER-BY-WIRE STEERING COLUMN FOR A MOTOR VEHICLE
DIRECTION PAR CÂBLE POUR UN VÉHICULE AUTOMOBILE

(30) Priorität: 22.06.2021 DE 102021206385
(43) Veröffentlichungstag der Anmeldung: 28.12.2022
(73) Patentinhaber: VOLKSWAGEN AG, 38440 Wolfsburg (DE)
(72) Erfinder: Rüger, Tobias, 38108 Braunschweig (DE); Kreis, Christopher, 38126 Braunschweig (DE); Bartels, Alexander, 38102 Braunschweig (DE)

(56) Entgegenhaltungen:
- DE-A1- 4 232 256
- US-A1- 2003 213 641
- US-A1- 2014 316 658
- US-A1- 2021 053 610

## Beschreibung

Die Erfindung bezieht sich auf eine Steer-by-wire-Lenkung mit den Merkmalen des Oberbegriffs von Patentanspruch 1.

In einer Steer-by-wire-Lenkung entfällt die bei herkömmlichen Lenkungen vorhandene mechanische Kopplung zwischen der Lenkungshandhabe, beispielsweise einem Lenkrad, und dem Radaktuator. Erforderliche Informationen zwischen der Lenkungshandhabe und dem Radaktuator werden lediglich elektrisch oder gegebenenfalls auch kabellos übertragen. Durch den Entfall der mechanischen Kopplung könnte sich die Lenkungshandhabe ohne weitere Maßnahmen praktisch rückwirkungsfrei bewegen. Ein beispielsweise sich nahezu ohne Widerstand stets gleichermaßen leicht drehendes Lenkrad wäre jedoch für einen mit einer herkömmlichen Lenkung mit mechanischer Kopplung vertrauten Fahrer stark gewöhnungsbedürftig, zumal hierbei auch jegliche Rückmeldung von der Fahrbahn am Lenkrad verloren ginge. Aus diesem Grunde wird ein Aktuator mit der Lenkungshandhabe gekoppelt, welcher an der Lenkungshandhabe eine Rückmeldung künstlich erzeugt und damit die für den Fahrer spürbare Haptik der Lenkung einstellt. Ein solcher Aktuator, der zumeist einen Elektromotor umfasst, wird im Folgenden daher auch als Haptikaktuator bezeichnet.

Die vorliegende Erfindung betrifft die Art und Weise der Erzeugung dieser Haptik. Hierzu bestehen im Stand der Technik bereits mannigfaltige Lösungsansätze.

Generell kann man die Haptik an der Lenkungshandhabe derart einstellen, dass der Widerstand mit Auslenkung der Lenkungshandhabe aus einer Neutralstellung, welche an einem Kraftfahrzeug Geradeausfahrt bedeutet, zunimmt. Ohne weitere Maßnahmen bleibt das Lenkgefühl jedoch recht synthetisch, da unabhängig vom Fahrverhalten des Fahrzeugs.

Eine erste Abhilfemöglichkeit ist, die Stellgröße für den Haptikaktuator nicht nur in Abhängigkeit des Lenkradwinkels zu bestimmen, sondern als zusätzliches Feedback den Lenkwinkel der Fahrzeugräder zu berücksichtigen, wie dies beispielsweise in DE 103 38 427 A1, EP 1 273 501 A2 und EP 1 433 691 A2 beschrieben ist.

Ein weiterer Lösungsansatz besteht darin, als Feedback für die Stellgröße des Haptikaktuators eine Zahnstangenkraft zu ermitteln, wobei vorausgesetzt wird, dass der Radaktuator ein Lenkgetriebe mit einer Zahnstange aufweist, was für die vorliegende Erfindung jedoch nicht notwendigerweise der Fall sein muss. Ein Beispiel hierfür ist aus US 2014/0316658 A1 bekannt.

In DE 10 2009 002 706 A1 wird vorgeschlagen, die Zahnstangenkraft anhand einer direkt auf das Lenkgetriebe einwirkenden Kraft zu ermitteln. Hierbei machen sich allerdings Eigenschaften der befahrenen Fahrbahn, wie Unebenheiten, Spurrillen oder eine Querneigung stark bemerkbar, was mitunter als unkomfortabel empfunden wird. Die Integration einer entsprechenden Kraftsensorik ist zudem für den Serieneinsatz zu aufwändig und fehleranfällig. Elastizitäten können das Signal verfälschen und sich negativ auf die Stellgenauigkeit auswirken.

In DE 10 2011 055 339 A1 wird die Zahnstangenkraft aus der Seitenkraft der betreffenden Achse der Lenkung geschätzt, wobei dies zusätzlich ein Filtern mittels eines Signalverarbeitungsglieds mit proportional-differenziellem Übertragungsverhalten umfasst, um ein komfortableres Lenkgefühl zu erzeugen. Die Seitenkraft wird anhand eines Fahrzeugmodels aus der Fahrgeschwindigkeit sowie der Gierrate und der Querbeschleunigung des Fahrzeugs berechnet. Eine solche Schätzung ist jedoch häufig nur bei bewegter Zahnstange möglich. Sobald sich die Lenkung im Bereich der Haftreibung befindet, sind keine genauen Werte mehr bestimmbar.

DE 10 2017 105 370 A1 beschreibt ebenfalls einen Haptikaktuator, der in Abhängigkeit einer geschätzten Zahnstangenkraft der Lenkung angesteuert wird. Zur Schätzung der Zahnstangenkraft der Lenkung werden ein Fahrzeugmodell und ein Lenkgetriebemodell bemüht, aus deren Kombination eine genauere Bestimmung der Zahnstangenkraft und damit ein verbessertes Lenkgefühl für den Fahrer folgen sollen.

Weitere Konzepte, die welche auf einem Feedback für den Haptikaktuator auf Grundlage einer Zahnstangenkraft beruhen, sind aus DE 10 2014 211 815 A1 und DE 10 2011 052 881 A1 bekannt. In DE 10 2014 211 815 A1 wird die Differenz zwischen einer Soll-Zustandsgröße und einer Ist-Zustandsgröße des Radaktuators, gefiltert zur Eliminierung eines gegebenenfalls enthaltenen Gleichanteils, im Stellsignal für den Haptikaktuator berücksichtigt. Über eine einstellbare Verstärkung kann der Fahrbahneinfluss mehr oder weniger stark eingeblendet werden. In DE 10 2011 052 881 A1 wird die Zahnstangenkraft anteilsmäßig aus zwei Komponenten zusammengesetzt, nämlich einer ersten Zahnstangenkraftkomponente, die in Abhängigkeit von mindestens einer in der Lenkvorrichtung auftretenden Kraft oder mindestens eines in der Lenkvorrichtung auftretenden Moments ermittelt wird, d.h. Fahrbahneigenschaften abbildet, und einer zweiten Zahnstangenkraftkomponente in Abhängigkeit von mindestens einer Fahrzeuggröße, die den Bewegungszustand des Fahrzeugs charakterisiert, d.h. von den Fahrbahneigenschaften unabhängig ist. Durch eine Verschiebung der sich ergänzenden Anteile beider Komponenten im Gesamtsignal lässt sich die Stärke der Rückmeldung von der Fahrbahn an der Lenkungshandhabe einstellen.

Aus DE 10 2009 050 776 A1 ist zur Ansteuerung eines Haptikaktuators bekannt, mittels eines Fahrzeugmodells aus der Fahrgeschwindigkeit und dem Lenkradwinkel eine Soll-Querbeschleunigung für einen Standardfall zu bestimmen, wie sie gemäß dem Fahrzeugmodell auftreten würde. Durch einen Querbeschleunigungssensor wird zudem ein Ist-Wert für die Querbeschleunigung gemessen. Aus beiden wird nun ein Verhältnisfaktor erzeugt und gegebenenfalls mit weiteren Einflussgrößen korrigiert. Aus dem korrigierten Verhältnisfaktor und dem Lenkradwinkel wird dann ein Produkt gebildet, welches als Zahlwert ein Sollmoment bzw. Stellgrößen für den Haptikaktuator sein soll. Gleichwohl soll hierdurch eine Fahrbahnrückmeldung simuliert werden, da sich Unterschiede im Untergrund bei gleichem Lenkradwinkel und gleichem Lenkwinkel in unterschiedlichen Bewegungszuständen des Kraftfahrzeugs widerspiegelten, so dass es genüge, diese Bewegungszustände direkt zu erfassen und es auf den Lenkwinkel der Räder nicht mehr ankomme.

Ein weiterer Lösungsansatz zur Einstellung der Haptik einer Steer-by-wire Lenkung ist in DE 10 2020 201 897 A1 beschrieben. Hier sind für den Haptikaktuator und den Radaktuator separate Berechnungsmodule zur Bestimmung der jeweiligen Stellgrößen vorgesehen. In Anlehnung an herkömmliche Lenkungen mit mechanischer Kopplung wird ein virtueller Drehstab simuliert und im Berechnungsmodul des Radaktuators ein Drehstabmoment bestimmt, welches als Feedbackmoment an das Berechnungsmodul des Haptikaktuators übergeben wird.

Aus DE 10 2004 001 318 A1 eine Steer-by-wire-Lenkung bekannt, welche insbesondere Steuerungsmittel mit separaten Berechnungsmodulen für den Haptikaktuator und den Radaktuator aufweist. In einem ersten Berechnungsmodul wird die Stellgröße für den Haptikaktuator in Abhängigkeit des Lenkradwinkels bestimmt. Als Feedbackgrößen werden der Lenkwinkel der Fahrzeugräder sowie zusätzlich das Drehmoment der Vorderräder berücksichtigt. In einem zweiten Berechnungsmodul für den Radaktuator werden als Eingangsgrößen der Lenkradwinkel sowie Fahrzeugparameter wie Fahrgeschwindigkeit, Neigungsrate und Querbeschleunigung verwendet, welche es erlauben, Referenz-Lenkwinkel für die Vorderräder zu bestimmen. Ferner werden die Ist-Lenkwinkel an den Vorderrädern erfasst und etwaige Abweichungen im zweiten Berechnungsmodul für den Radaktuator ausgeregelt.

Eine Steer-by-wire-Lenkung mit den Merkmalen des Oberbegriffs von Patentanspruch 1 ist aus DE 42 32 256 A1 bekannt. Die Zielgröße zur Ansteuerung des Haptikaktuators wird dabei aus mehreren Summanden gebildet, welche jeweils individuell und unabhängig erzeugt werden aus dem Lenkradwinkel, der Lenkradwinkelgeschwindigkeit, der Giergeschwindigkeit, der Querbeschleunigung und der Lenkreaktionskräfte der Fahrzeugräder.

Vor diesem Hintergrund liegt der Erfindung die Aufgabe zugrunde, Alternativen zur Einstellung der Haptik einer Steer-by-wire Lenkung aufzuzeigen. Die besondere Herausforderung ist dabei, dass das Lenkgefühl nicht synthetisch oder entkoppelt wahrgenommen wird. Es besteht vielmehr der Anspruch, dass ein Fahrzeug mit Steer-by-wire-Lenkung mindestens ein ebenso positiv wahrgenommenes Lenkgefühl aufweist wie ein Fahrzeug mit konventionellem Lenksystem.

Diese Aufgabe wird durch eine Steer-by-wire-Lenkung gemäß Patentanspruch 1 gelöst. Diese zeichnet sich insbesondere dadurch aus, dass die Steuerungsmittel derart konfiguriert sind, die Querbeschleunigung des Fahrzeugs unmittelbar in ein Feedbackmoment umzurechnen und dieses Feedbackmoment in dem ersten Berechnungsmodul, ganz oder mit einem Skalierungsfaktor größer 0 und kleiner als 1, als Summand in ein die Lenkungsrückwirkung repräsentierendes Sollmoment des Haptikaktuators eingeht.

Es hat sich gezeigt, dass hierdurch im Berechnungsmodul des Radaktuators mit höheren Verstärkungen gearbeitet werden kann. Dies kommt der Stellgenauigkeit des Radaktuators zugute und wird dadurch ermöglicht, dass bei der Auslegung des zweiten Berechnungsmoduls das erste Berechnungsmodul nicht oder zumindest weniger stark berücksichtigt werden muss, da für das erste Berechnungsmodul ein Feedback zur Verfügung gestellt wird, welches nicht oder weniger stark vom zweiten Berechnungsmodul abhängig ist.

Über die Berücksichtigung der Querbeschleunigung, die direkt in ein Feedbackmoment umgerechnet wird, im Berechnungsmodul für den Haptikaktuator ist es möglich, ein Lenkgefühl zu generieren, welches dem Fahrer den aktuellen Fahrzustand transparent darstellen kann.

Das Feedbackmoment kann sehr einfach aus der Querbeschleunigung z.B. mittels einer Kennlinie gewonnen werden. Es ist eine mathematische Funktion, die jedem Wert aus dem Definitionsbereich, nämlich einer Querbeschleunigung einen Wert aus dem Wertebereich, nämlich ein Feedbackmoment eindeutig zuordnet. Auf diese Weise ist eine direkte Umrechnung ohne Berücksichtigung weiterer Größen möglich. Die Kennlinie kann in den Steuerungsmitteln hinterlegt werden.

Die Steuerungsmittel sind derart konfiguriert, dass das zweite Berechnungsmodul ein zusätzliches Feedbackmoment generiert, welches in dem ersten Berechnungsmodul mit einem Skalierungsfaktor zwischen 0 und 1 als Summand in das Sollmoment des Haptikaktuators eingeht. Es wird hier ein Feedbacksignal vom Radaktuator genutzt, um Fahrbahninformationen schnell an den Fahrer zu übermitteln. Reibungs- und Trägheitseinflüsse aus dem Radaktuator bekommt der Fahrer nur in reduziertem Maß durch das Feedback mitgeteilt.

Besondere Ausführungsarten der Erfindung sind Gegenstand weiterer Patentansprüche.

Die Steuerungsmittel können derart konfiguriert sein, dass das Feedbackmoment aus der Querbeschleunigung anteilig, optional hälftig, in dem ersten Berechnungsmodul in das Sollmoment des Haptikaktuators und in dem zweiten Berechnungsmodul in die Bestimmung einer Stellgröße des Radaktuators eingeht und ein Feedbacksignal des Radaktuators in die Ermittlung des Sollmoments des Haptikaktuators eingeht.

Im zweiten Berechnungsmodul kann auch hier mit hohen Verstärkungen gearbeitet werden, was der Stellgenauigkeit des Radaktuators zugutekommt. Grund hierfür ist, dass die Bestimmung der Stellgröße für den Haptikaktuator im ersten Berechnungsmodul über das Feedbacksignal vom Radaktuator durch den Einsatz der neuen Feedbackquelle aus der Querbeschleunigung abgeschwächt wurde. Das Feedbacksignal vom Radaktuator wird gleichwohl weiterhin genutzt, um Fahrbahninformationen schnell an den Fahrer zu übermitteln. Reibungs- und Trägheitseinflüsse aus dem Radaktuator bekommt der Fahrer nur in reduziertem Maß durch das Feedback mitgeteilt. Diese Ausführung zeichnet sich durch eine erhöhte Stabilität aus, da bei einer Querbeschleunigungsänderung sowohl der Haptikaktuator als auch der Radaktuator sofort reagieren, ohne dass eine Abweichung zwischen dem Haptikaktuator und dem Radaktuator in Bezug auf eine Lenkwinkelvorgabe aufgebaut werden muss. Letztlich resultiert hieraus eine bessere Fahrzeugansprache, da die Stellung des Radaktuators auch in Abhängigkeit von der wirkenden Querbeschleunigung eingestellt wird.

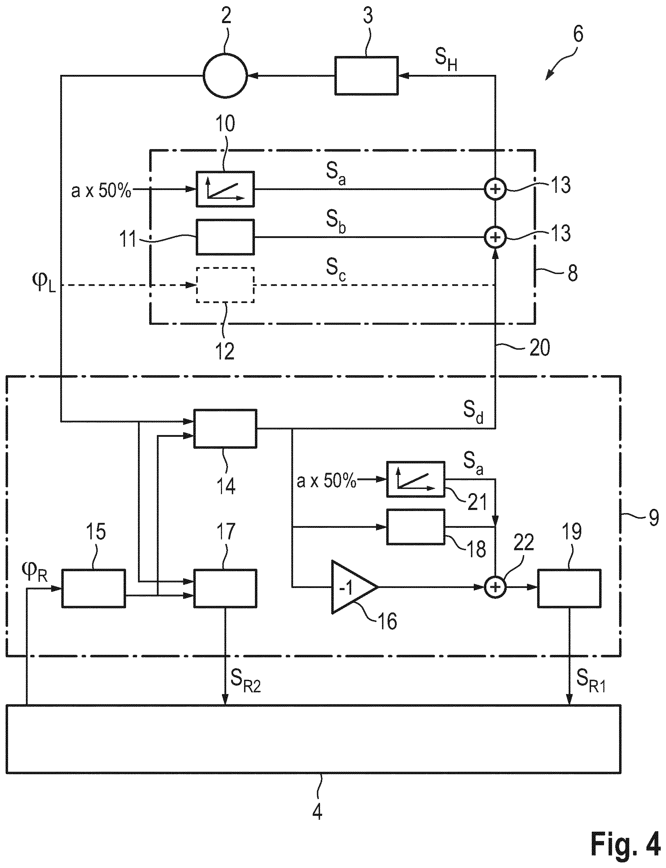

Gemäß einer weiteren besonderen Ausführungsart kann ein Rückstellmoment zur aktiven Rückstellung der Lenkung in eine Neutralstellung der Lenkungshandhabe entsprechend Geradeausfahrt anteilig, optional hälftig, in dem ersten Berechnungsmodul in das Sollmoment des Haptikaktuators und in dem zweiten Berechnungsmodul in die Bestimmung einer Stellgröße des Radaktuators eingehen. Insbesondere bei der Ausführungsvariante gemäß Fig. 4 kann die Einbeziehung der aktiven Rückstellung in gleicher Weise erfolgen, wie die Einbeziehung eines Feedbacks aus der Querbeschleunigung.

Gemäß einer weiteren besonderen Ausführungsart umfassen die Steuerungsmittel einen Regler, dem als Eingangsgrößen ein Lenkradwinkel und eine den Lenkwinkel der Fahrzeugräder repräsentierende Größe, insbesondere Stellungsgröße des Radaktuators, aufgeschaltet sind, und der als Ausgangsgröße ein zusätzliches Feedbackmoments als Basis für ein Stellgrößenkomponente für den Radaktuator generiert, einen Summierer, welcher einen Anteil des Feedbackmoments aus der Querbeschleunigung und das zusätzliche Feedbackmoment zu dem Sollmoment für den Haptikaktuator addiert, einen Invertierer zur Invertierung des zusätzlichen Feedbackmoments aus dem Regler, sowie einen diesem nachfolgenden Summierer, welcher den verbleibenden Anteil des Feedbackmoments aus der Querbeschleunigung und das invertierte zusätzliche Feedbackmoment zu einem weiteren Sollmoment addiert, welches Grundlage für die Stellgrößenkomponente des Radaktuators ist. Optional kann zudem eine Vorsteuerung für den Radaktuator auf Grundlage des Lenkradwinkels und der den Lenkwinkel der Fahrzeugräder repräsentierende Größe, welche eine zusätzliche Komponente der Stellgröße des Radaktuators ist, vorgesehen sein. Hiermit lässt sich die Erfindung sehr gut an einem herkömmlichen Kraftfahrzeug umsetzen, welches als Lenkungshandhabe ein Lenkrad aufweist.

Der Radaktuator kann beispielsweise als Zahnstangenlenkgetriebe mit angeschlossenem Elektromotor ausgeführt sein. Jedoch kann dieser beispielsweise auch separate Antriebseinrichtungen für einzelne Räder aufweisen.

Gemäß einer weiteren besonderen Ausführungsart geht in das Sollmoment des Haptikaktuators als weiterer Summand ein Moment ein, welches aus einer den Lenkbefehl repräsentierenden Größe gewonnen ist.

Ferner kann in das Sollmoment des Haptikaktuators als weiterer Summand ein Rückstellmoment zur aktiven Rückstellung der Lenkungshandhabe in eine Neutralstellung eingehen.

Gemäß einer weiteren besonderen Ausführungsart ist zur Erfassung der Querbeschleunigung ein Querbeschleunigungssensor vorgesehen, welcher am Radaktuator oder am Fahrzeugaufbau im Bereich des Vorderwagens angeordnet ist. Ein Verbau des Sensors am Radaktuator hat fertigungstechnische Vorteile. Zudem wird hierdurch die Querbeschleunigung automatisch an einer Stelle erfasst, an welcher der Einfluss der von den Hinterrädern übertragenen Seitenkräften minimal ist. Da der Radaktuator oftmals über elastische Komponenten, beispielsweise über einem Hilfsrahmen mit elastischen Lagern am Fahrzeugaufbau befestigt ist, kann die Signalqualität etwas beeinträchtigt sein. Dem kann durch eine etwas aufwändigere Anbringung des Querbeschleunigungssensors am Fahrzeugaufbau abgeholfen werden. Für den Einsatzzweck zur Generierung eines Lenkgefühls in Abhängigkeit der Querbeschleunigung sollte der Querbeschleunigungssensor an einer Längsposition untergebracht werden, an welcher die Auswirkungen der von den Hinterrädern übertragenen Seitenkräften möglichst gering sind, d.h. vorzugsweise am Vorderwagen.

Nachfolgend wird die Erfindung anhand von in der Zeichnung dargestellten Ausführungsbeispielen näher erläutert. Die Zeichnung zeigt in:
- Fig. 1: eine schematische Ansicht einer Steer-by-wire-Lenkung nach einem Ausführungsbeispiel der Erfindung,
- Fig. 2: eine schematische Ansicht einer Ausführungsvariante für die Steuerungsmittel der Steer-by-wire-Lenkung gemäß Fig. 1, welche nicht Gegenstand der vorliegenden Erfindung ist,
- Fig. 3: eine schematische Ansicht einer erfindungsgemäßen Ausführungsvariante für die Steuerungsmittel der Steer-by-wire-Lenkung gemäß Fig. 1, und in
- Fig. 4: eine schematische Ansicht einer weiteren erfindungsgemäßen Ausführungsvariante für die Steuerungsmittel der Steer-by-wire-Lenkung gemäß Fig. 1.

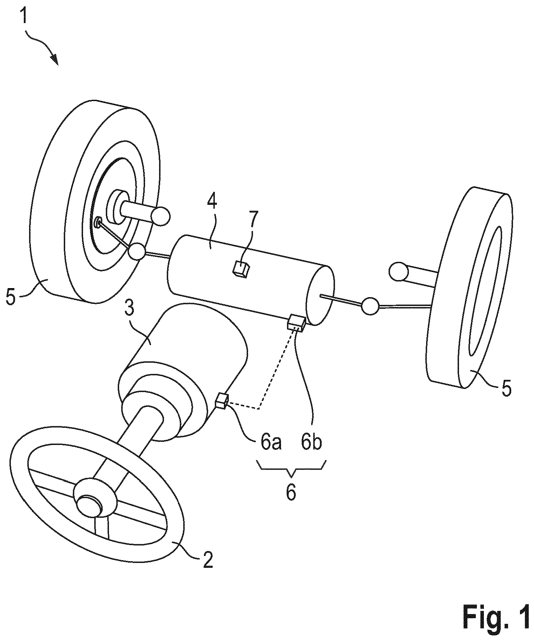

Fig. 1 zeigt beispielhaft eine schematische Ansicht einer Steer-by-Wire-Lenkung 1 für ein Kraftfahrzeug, insbesondere Personenkraftfahrzeug oder leichtes Nutzfahrzeug.

Die Steer-by-wire-Lenkung 1 umfasst zunächst eine Lenkungshandhabe 2 zur Eingabe eines Lenkbefehls durch einen Fahrer des Kraftfahrzeugs. Die Lenkungshandhabe 2 ist beispielsweise ein Lenkrad wie dargestellt, kann jedoch auch ein anderes Eingabemittel wie ein Joystick oder dergleichen sein. Im Fall eines Lenkrads ist der Lenkbefehl ein Lenkradwinkel. Zudem können im Lenkbefehl optional die Lenkradwinkelgeschwindigkeit und/oder Lenkradwinkelbeschleunigung berücksichtigt sein.

Ferner umfasst die Steer-by-wire-Lenkung 1 einen Haptikaktuator 3, der mit der Lenkungshandhabe 2 mechanisch gekoppelt ist. Der Haptikaktuator 3 dient dazu, für den Fahrer an der Lenkungshandhabe 2 eine Lenkungsrückwirkung zu simulieren. Diese äußert sich durch einen Widerstand beim Lenken sowie gegebenenfalls auch eine aktive Rückstellung der Lenkungshandhabe 2 in eine Neutralstellung entsprechend Geradeausfahrt auf ebenem Untergrund. Der Haptikaktuator 3 kann einen Elektromotor, gegebenenfalls ein Getriebe sowie ein diesem zugehörigen Steuergerät umfassen. Anstelle eines Elektromotors sind auch andere fremdenergiebetätigte Antriebseinrichtungen grundsätzlich einsetzbar.

Weiterhin umfasst die Steer-by-wire-Lenkung 1 einen Radaktuator 4 zur Einstellung eines Lenkwinkels an lenkbaren Fahrzeugrädern 5 des Kraftfahrzeugs. Der Radaktuator 4 kann durch Einzelantriebe für die Fahrzeugräder 5 gebildet sein. Bei dem vorliegenden Ausführungsbeispiel ist zur Veranschaulichung ein Lenkgetriebe dargestellt, dass mit den gelenkten Vorderrädern des Fahrzeugs gekoppelt ist. Als Antrieb für das Lenkgetriebe dient ein Elektromotor oder eine sonstige fremdkraftbetriebene Antriebseinrichtung.

Kennzeichnend für eine Steer-by-wire-Lenkung 1 besteht vorliegend keine mechanische Kopplung von dem Radaktuator 4 zu der Lenkungshandhabe 2 und dem Haptikaktuator 3. Zur Verknüpfung des Radaktuators 4 mit der Lenkungshandhabe 2 und dem Haptikaktuator 3 umfasst die Steer-by-wire-Lenkung 1 Steuerungsmittel 6, die derart konfiguriert sind, um in Abhängigkeit des fahrerseitigen Lenkbefehls den Radaktuator 4 zur Bewirkung einer Lenkbetätigung der Fahrzeugräder 5 zu veranlassen sowie den Haptikaktuator 3 zur Erzeugung einer Lenkungsrückwirkung an der Lenkungshandhabe 2 zu veranlassen.

Die Verknüpfung kann elektrisch oder auch kabellos vorgenommen sein.

Die Steuerungsmittel 6 können in einem zentralen Steuergerät konzentriert oder auf verschiedene Steuergeräte 6a und 6b am Haptikaktuator 3 und am Radaktuator 4 verteilt, wie dargestellt, oder in anderer Weise verteilt sein.

Erfindungsgemäß wird ein Querbeschleunigungssensor 7 als zusätzliche Signalquelle genutzt, um ein Lenkgefühl zu generieren, welches dem Fahrer den aktuellen Fahrzustand transparent darstellen kann. Der Einsatz eines Querbeschleunigungssensor 7 beruht auf der Annahme, dass alle Kräfte, welche auf das Fahrzeug wirken, durch die Reifen der Fahrzeugräder 5 übertragen werden oder Gravitationskräfte sind. Andere Kräfte wie Einflüsse aus Seitenwind oder Luftwiderstand können gegebenenfalls zusätzlich berücksichtigt werden, sind jedoch nicht primär Gegenstand der nachfolgenden Betrachtungen. Bei entsprechender Positionierung des Querbeschleunigungssensors 7 und bekannter Fahrzeugmasse können die Seitenführungskräfte der vorderen gelenkten Fahrzeugräder 5 aus der mit dem Querbeschleunigungssensor 7 gemessenen Querbeschleunigung a sehr leicht ermittelt werden. Muss der Querbeschleunigungssensor 7 an einem nicht-idealen Anbringungsort angeordnet werden, kann die für die Seitenführungskräfte der gelenkten Fahrzeugräder 5 relevante Querbeschleunigung a anhand eines Fahrzeugmodels umgerechnet werden. Diese gemessene Querbeschleunigung a wird in nachfolgend näher erläuterter Art und Weise bei der Einstellung der Haptik der Lenkung 1 berücksichtigt.

Anstatt wie im Stand der Technik aus der Querbeschleunigung a eine Zahnstangenkraft zu bestimmen und diese für eine Zahnstangenkraftregelung zu nutzen, wird vorliegend die gemessene Querbeschleunigung a direkt in ein Feedbackmoment Sₐ umgerechnet.

Die Steuerungsmittel 6 beinhalten dazu ein erstes Berechnungsmodul 8 für die vom Haptikaktuator 3 bereitgestellte Lenkungsrückwirkung sowie ein zweites Berechnungsmodul 9 für den vom Radaktuator 4 einzustellenden Lenkwinkel. Dabei ist zumindest dem zweiten Berechnungsmodul 9, gegebenenfalls auch beiden Berechnungsmodulen 8 und 9 eine den Lenkbefehl repräsentierende Größe φ_{L} als Eingangsgröße aufgeschaltet.

Ferner sind die Steuerungsmittel 6 derart konfiguriert, die Querbeschleunigung a des Fahrzeugs unmittelbar in ein Feedbackmoment Sₐ umzurechnen. Dieses Feedbackmoment Sₐ geht in dem ersten Berechnungsmodul 8, ganz oder mit einem Skalierungsfaktor größer 0 und kleiner als 1, als Summand in ein die Lenkungsrückwirkung repräsentierendes Sollmoment S_{H} des Haptikaktuators 3 ein. Das Sollmoment S_{H} stellt somit die Stellgröße für den Haptikaktuator 3 dar.

Das Feedbackmoment Sₐ wird aus der Querbeschleunigung a mittels einer Kennlinie gewonnen, welche eine mathematische Funktion ist, die jedem Wert aus dem Definitionsbereich, nämlich einer Querbeschleunigung a, einen Wert aus dem Wertebereich, nämlich ein Feedbackmoment Sa eindeutig zuordnet. Diese Umrechnung erfolgt direkt ohne die Berücksichtigung weiterer Einflussgrößen. Die Kennlinie kann fahrzeugspezifisch und/oder lenkungsspezifisch festgelegt sein, um eine gewünschte Haptik zu modellieren.

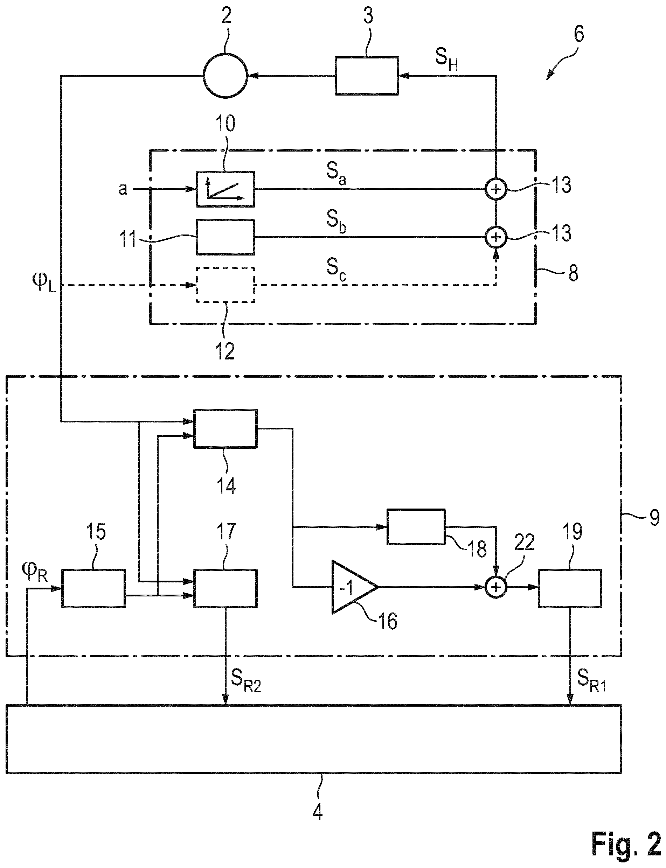

In Fig. 2 ist beispielhaft eine Ausführungsvariante für die Steuerungsmittel 6 der Steer-by-wire-Lenkung 1 dargestellt, welche nicht Gegenstand der Erfindung ist..

Bei dieser Ausführungsvariante erfährt das erste Berechnungsmodul 8 im Unterscheid zum oben erläuterten Stand der Technik keinerlei Feedback aus dem zweiten Berechnungsmodul 9. Wie oben erläutertet, ist es im Stand der Technik vielmehr üblich, als Feedbacksignal beispielsweise Stellungsgrößen des Radaktuators 4 zu verwenden.

Als einfachste Form der Umsetzung wird die gemessene Querbeschleunigung a nach Umrechnung mithilfe der hinterlegten Kennlinie als Feedbackmoment Sₐ für den Haptikaktuator 3 verwendet.

In Fig. 2 weist das erste Berechnungsmodul 8 einen ersten Block 10 auf, in dem das Eingangssignal des Querbeschleunigungssensors 7 in das Feedbackmoment Sₐ umgerechnet wird.

Weiterhin ist im ersten Berechnungsmodul 8 ein zweiter Block 11 zu erkennen, in welchem ein Rückstellmoment S_{b} für eine aktive Rückstellung der Lenkungshandhabe 2 in ihre Neutralstellung generiert wird.

Optional kann das erste Berechnungsmodul 8 einen dritten Block 12 aufweisen, in welchen aus dem Lenkbefehl des Fahrers, insbesondere einer diesen repräsentierende Größe φ_{L} als Eingangsgröße eine weitere Momentenkomponente S_{c} erzeugt wird, welche beispielsweise mit zunehmender Auslenkung der Lenkungshandhabe 2 aus der Neutralstellung zunimmt.

Sämtliche Momentenkomponenten Sₐ, S_{b} und S_{c} sind mittels eines Summierers 13 additiv, optional individuell gewichtet, zu dem Sollmoment S_{H} für die Ansteuerung des Haptikaktuators 3 verknüpft.

Das zweite Berechnungsmodul 9 in Fig. 2 beinhaltet einen Regler 14, dem . Gegebenenfalls kann zur Umrechnung der die Stellung des Radaktuators 4 repräsentierende Größe φ_{R} ein Konvertierer 15 vorgeschaltet sein.

Wird beispielsweise als Lenkbefehl ein Lenkradwinkel verwendet und ist die die Stellung des Radaktuators 4 repräsentierende Größe beispielsweise eine Zahnstangenposition eines Lenkgetriebes, kann letztere im Konvertierer 15 unter Berücksichtigung der geometrischen Verhältnisse in eine korrespondierende Winkelgröße umgerechnet werden. Für die die Stellung des Radaktuators 4 repräsentierende Größe können jedoch auch andere Parameter herangezogen werden, welche einen möglichst präzisen Rückschluss auf den Lenkwinkel der Fahrzeugräder 5 erlauben.

Das Ausgangssignal des Reglers 14 kann als Kraft- oder Momentengröße betrachtet werden und wird, durch einen Invertierer 16 invertiert, dem Radaktuator 4 als Stellgrößenkomponente S_{R1} aufgeschaltet.

Optional umfasst das zweite Berechnungsmodul 9 eine Vorsteuerung 17 für den Radaktuator 4 auf Grundlage der Eingangsgrößen des Reglers 14, beispielsweise eines Lenkradwinkels und einer den Lenkwinkel der Fahrzeugräder repräsentierenden Größe, insbesondere Stellungsgröße des Radaktuators 4. Die Vorsteuerung generiert eine zusätzliche Komponente der Stellgröße S_{R2} des Radaktuators 4.

Optional umfasst das zweite Berechnungsmodul 9 ferner einen Block 18, in welchem ein Rückstellmoment oder eine Rückstellkraft für eine aktive Rückstellung der Lenkungshandhabe 2 in ihre Neutralstellung generiert wird. Das entsprechende Ausgangssignal wird im Summierer 19 mit dem invertierten Ausgangssignal des Reglers 14 addiert und, gegebenenfalls unter Zwischenschaltung eines weiteren Konvertierers 19 analog dem Konvertierer 15, als besagte Stellgrößenkomponente S_{R1} für den Radaktuator 4 verwendet.

In der Regelschleife für den Radaktuator 4 kann vorliegend mit einer hohen Verstärkung gearbeitet werden, was der Stellgenauigkeit des Radaktuators 4 zugutekommt, da ein Feedbacksignal aus dem zweiten Berechnungsmodul 9 im ersten Berechnungsmodul nicht berücksichtigt werden muss.

Reibungseinflüsse aus dem Radaktuator 4 sind nicht durch den Fahrer wahrnehmbar, da dieser nicht für die Berechnung eines Feedbackmoments genutzt wird. Untergrundinformation werden durch den Fahrer nur schwach wahrgenommen, so dass die Haptik der Lenkung recht komfortabel ist.

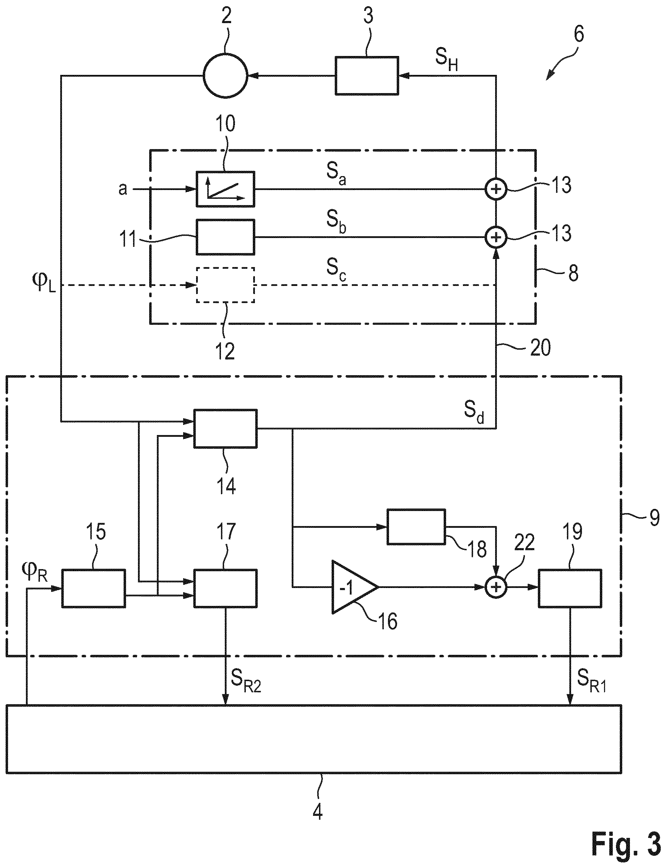

Fig. 3 zeigt beispielhaft eine erfindungsgemäße Ausführungsvariante für die Steuerungsmittel 6 der Steer-by-wire-Lenkung 1, welche als Modifikation der Ausführungsvariante gemäß Fig. 2 verstanden werden kann, so dass im Folgenden lediglich auf die Unterschiede zu Fig. 2 eingegangen wird.

In diesem Fall wird in dem zweiten Berechnungsmodul 9 ein zusätzliches Feedbackmoment S_{d} generiert, welches in dem ersten Berechnungsmodul 8 mit einem Skalierungsfaktor zwischen 0 und 1 als Summand in das Sollmoment S_{H} des Haptikaktuators 3 eingeht. Wie Fig. 3 zeigt, besteht hierzu ein Feedbackkanal 20 zwischen dem zweiten Berechnungsmodul 9 und dem ersten Berechnungsmodul 8.

Das Feedbacksignal basiert auf dem Ausgangssignal des Reglers 14, welches dem Summierer 13 des ersten Berechnungsmoduls 8 aufgeschaltet ist.

Die gemessene Querbeschleunigung a wird bei der Ausführungsvariante gemäß Fig. 3 also wiederum mit einer Kennlinie in ein Feedbackmoment Sₐ umgerechnet. Anschließend werden anteilig das radaktuatorseitige zusätzliche Feedbackmoment S_{d}, berechnet im zweiten Berechnungsmodul 9, und das aus der Querbeschleunigung a bestimmte Feedbackmoment Sₐ genutzt.

In der Regelschleife für den Radaktuator 4 kann wiederum mit hohen, für die Stellgenauigkeit günstigen Verstärkungen gearbeitet werden, weil die Regelung im zweiten Berechnungsmodul 9 über das Feedbackmoment S_{d} durch den Einsatz der neuen Feedbackquelle, nämlich das Feedbackmoment Sₐ aus der Querbeschleunigung a abgeschwächt wurde.

Im Unterschied zur Ausführungsvariante gemäß Fig. 1 wird ein Feedbacksignal vom Radaktuator 4 weiterhin genutzt, um Fahrbahninformationen schnell an den Fahrer zu übermitteln. Reibungs- und Trägheitseinflüsse aus dem Radaktuator 4 bekommt der Fahrer nur in reduziertem Maß durch das Feedback mitgeteilt.

Fig. 4 zeigt beispielhaft eine weitere erfindungsgemäße Ausführungsvariante für die Steuerungsmittel 6 der Steer-by-wire-Lenkung 1, welche als Modifikation der Ausführungsvarianten gemäß Fig. 2 und 3 verstanden werden kann, so dass im Folgenden lediglich auf die Unterschiede eingegangen wird.

Bei der Ausführungsvariante gemäß Fig. 4 wird das Feedbackmoment Sₐ aus der Querbeschleunigung a anteilig, optional beispielsweise hälftig wie in Fig. 4 angedeutet, in dem ersten Berechnungsmodul 8 und in dem zweiten Berechnungsmodul 9 berücksichtigt, wie dies anhand der Blöcke 10 und 21 gezeigt ist.

Das Feedbackmoment Sₐ aus der Querbeschleunigung a kann insbesondere als additive Komponente in das Sollmoment S_{H} des Haptikaktuators 3 und in dem zweiten Berechnungsmodul 9 in die Bestimmung einer Stellgrößenkomponente S_{R1} des Radaktuators 4 eingehen. Ein Feedbacksignal des Radaktuators 4 wird in Form eines zusätzlichen Feedbackmoments S_{d} als additive Komponente in dem Sollmoment S_{H} des Haptikaktuators 3 berücksichtigt.

Im zweiten Berechnungsmodul 8 kann auch hier wiederum mit hohen Verstärkungen gearbeitet werden, was der Stellgenauigkeit des Radaktuators 4 zugutekommt. Grund hierfür ist, dass die Bestimmung der Stellgröße für den Haptikaktuator 3 im ersten Berechnungsmodul 8 über das Feedbacksignal vom Radaktuator 4 durch den Einsatz der neuen Feedbackquelle aus der Querbeschleunigung a abgeschwächt wurde. Das zusätzliche Feedbackmoment S_{d} vom Radaktuator 4 wird genutzt, um Fahrbahninformationen schnell an den Fahrer zu übermitteln. Reibungs- und Trägheitseinflüsse aus dem Radaktuator 4 bekommt der Fahrer nur in reduziertem Maß durch das Feedback mitgeteilt.

Im Vergleich zu den Ausführungsvarianten gemäß Fig. 2 und 3 zeichnet sich die Ausführungsvariante gemäß Fig. 4 zusätzlich durch eine erhöhte Stabilität des Reglers 14 aus, da bei einer Querbeschleunigungsänderung sowohl der Haptikaktuator 3 als auch der Radaktuator 4 sofort reagieren, ohne dass eine Abweichung zwischen dem Haptikaktuator 3 und dem Radaktuator 4 am Reglereingang aufgebaut werden muss. Letztlich resultiert hieraus eine bessere Fahrzeugansprache, da die Stellung des Radaktuators 4 auch in Abhängigkeit von der wirkenden Querbeschleunigung a eingestellt wird.

Sollen eine aktive Rückstellfunktion als auch ein Feedbackmoment Sₐ aus der Querbeschleunigung a genutzt werden, so kann das neu generierte Feedbacksignal auf die gleiche Weise genutzt werden, wie das Feedbackmoment S_{d} vom Radaktuator 4. Die aktive Rückstellfunktion wirkt weiterhin in Abhängigkeit des Feedbacksignals.

Der eingesetzte Querbeschleunigungssensor 7 wird idealerweise synchron zum Funktionsaufruf des Reglers 14 abgetastet. Folgende Signalquellen kommen dabei für die Querbeschleunigung a in Frage.

In einer ersten Variante wird der Querbeschleunigungssensor 7 direkt im Radaktuator 4, beispielsweise in einem Lenkgetriebe verbaut, was fertigungstechnisch einfach zu bewerkstelligen ist. Um auf die durch die Reifen übertragenen Seitenkräfte rückschließen zu können, soll der Querbeschleunigungssensor 7 möglichst steif an den Fahrzeugaufbau angebunden werden. Am Radaktuator 4 ist dies jedoch nicht immer der Fall, falls dieser an einem Achsträger und mit einer eigenen Lagerung befestigt ist. Durch eine zu elastische Anbindung kann es bei Änderungen der Seitenkräfte zu einem Überschwingen der gemessenen Querbeschleunigung a kommen.

Alternativ wird daher der Querbeschleunigungssensor 7 unmittelbar am Fahrzeugaufbau befestigt. Dabei kann eine direkte Kommunikationsanbindung zum Radaktuator 4 über ein elektrisches Kabel oder dergleichen vorgesehen werden. Diese Variante ist messtechnisch vorteilhaft, da hier die Kräfte, welche auf das Kraftfahrzeug wirken, zuverlässig bestimmt werden können. Die gemessenen Querbeschleunigungen a entsprechen den Beschleunigungen, welche der Fahrer erfährt. Sie stellen damit eine gute Grundlage für das Feedbackmoment Sₐ dar.

In einer weiteren Variante ist der Querbeschleunigungssensor 7 ebenfalls unmittelbar am Fahrzeugaufbau befestigt, weist jedoch eine indirekte Kommunikationsanbindung, beispielsweise über ein Bussystem, zum Radaktuator 4 auf. Um die Kosten möglichst gering zu halten, können so Sensoren genutzt werden, welche an anderer Stelle bereits im Fahrzeug integriert sind. Beispielsweise ist es möglich, die Sensorik eines Elektronischen Stabilitätsprograms (ESP) zu verwenden. Hier sollte die Signalaufbereitung jedoch im jeweiligen Steuergerät 6a und 6b der Steer-by-wire-Lenkung 1 erfolgen, da anderenfalls größere Datenmengen zwischen Steuergeräten ausgetauscht werden müssten, was die Schnelligkeit der Regelung beeinträchtigen könnte.

Für den Einsatzzweck zur Generierung eines Lenkgefühls in Abhängigkeit der Querbeschleunigung sollte der Querbeschleunigungssensor 7 an einer Längsposition des Kraftfahrzeugs untergebracht werden, an welcher die Auswirkungen der von den Hinterrädern übertragenen Seitenkräften minimal sind. Diese Position kann in Abhängigkeit der Fahrzeugmasse, dessen Schwerpunktlage und des Trägheitsmoments berechnet werden. Sie liegt im Bereich des Vorderwagens.

Die vertikale Position des Querbeschleunigungssensors 7 sollte auf Höhe des Fahrzeugschwerpunktes liegen. Wird die vertikale Position des Querbeschleunigungssensor 7 geändert, so werden hier zusätzliche Beschleunigungen aus der Wankbewegung des Kraftfahrzeugs erfasst. Wie stark der Einfluss aus Wankbewegungen im Lenkgefühl sein soll, ist Teil der Abstimmung des Lenkgefühls und kann über die vertikale Position eingestellt werden.

Da es unter Umständen nicht möglich ist, den Querbeschleunigungssensor 7 exakt an der gewünschten Stelle zu befestigen, können die gemessenen Querbeschleunigungen a am tatsächlichen Messpunkt auf die ideale Position umgerechnet werden. Insbesondere ist dies erforderlich, wenn der Querbeschleunigungssensor 7 in lenkungsfernen Steuergeräten verbaut ist. Hierfür werden gegebenenfalls erforderliche Drehraten und Drehratenänderungen in Bezug auf ein Gieren, Wanken und Rollen des Fahrzeugs herangezogen.

Eine weitere Möglichkeit, das Lenkgefühl bei der Signalaufbereitung zu beeinflussen, ist die Änderung der Winkel um die Hochachse, in welcher die Querbeschleunigung a erfasst wird. Je nach aktuellem Lenkwinkel der Fahrzeugräder 5, wirkt sich in Fahrzeugen mit einer konventionellen Lenkung auch die Längsbeschleunigung auf das Lenkgefühl aus. Um dies nachzubilden, kann die Winkel, in dem die Querbeschleunigung a erfasst, wird leicht gedreht werden. Als maximaler Winkel sollte dabei jedoch der tatsächliche Lenkwinkel der Fahrzeugräder 5 benutzt werden. Falls diese Funktionalität genutzt wird, muss berücksichtigt werden, dass die Längsbeschleunigung sowohl durch Kraftübertragungen an der Vorderachse des Fahrzeugs als auch an der Hinterachse hervorgerufen wird.

Die Erfindung wurde vorstehend anhand eines Ausführungsbeispiels und verschiedenen Varianten näher erläutert. Diese dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Offenbarung ist daher ausdrücklich nicht auf die konkret beschriebenen Kombinationen beschränkt, sondern umfasst alle durch die Patentansprüche definierten Ausgestaltungen.

### Bezugszeichenliste

- 1: Steer-by-wire-Lenkung
- 2: Lenkungshandhabe
- 3: Haptikaktuator
- 4: Radaktuator
- 5: Fahrzeugrad
- 6: Steuerungsmittel
- 7: Querbeschleunigungssensor
- 8: erstes Berechnungsmodul
- 9: zweites Berechnungsmodul
- 10: Block
- 11: Block
- 12: Block
- 13: Summierer
- 14: Regler
- 15: Konvertierer
- 16: Invertierer
- 17: Vorsteuerung
- 18: Block
- 19: Konvertierer
- 20: Feedbackkanal
- 21: Block
- 22: Summierer
- a: Querbeschleunigung
- Sₐ: Feedbackmoment aus Querbeschleunigung
- S_{b}: Rückstellmoment für aktive Rückstellung
- S_{c}: weitere Momentenkomponente
- S_{d}: weiters Feedbackmoment
- S_{H}: Sollmoment - Stellgröße des Haptikaktuators 3
- S_{R1}: Stellgrößenkomponente für den Radaktuator 4
- S_{R2}: Komponente der Stellgröße des Radaktuators 4
- φ_{L}: den Lenkbefehl repräsentierende Größe
- φ_{R}: den Lenkwinkel der Fahrzeugräder repräsentierende Größe

## Patentansprüche

1. Steer-by-wire-Lenkung (1) für ein Kraftfahrzeug, umfassend
eine Lenkungshandhabe (2) zur Eingabe eines Lenkbefehls durch einen Fahrer des Kraftfahrzeugs,
einen Haptikaktuator (3), der mit der Lenkungshandhabe (2) mechanisch gekoppelt ist, zur Simulation einer Lenkungsrückwirkung für den Fahrer an der Lenkungshandhabe (2), einen Radaktuator (4) zur Einstellung eines Lenkwinkels an lenkbaren Fahrzeugrädern (5) des Kraftfahrzeugs,
Steuerungsmittel (6), die derart konfiguriert sind, um in Abhängigkeit des fahrerseitigen Lenkbefehls den Radaktuator (4) zur Bewirkung einer Lenkbetätigung der Fahrzeugräder (5) zu veranlassen sowie den Haptikaktuator (3) zur Erzeugung einer Lenkungsrückwirkung zu veranlassen, wobei die Steuerungsmittel (6) ein erstes Berechnungsmodul (8) für die vom Haptikaktuator (3) bereitgestellte Lenkungsrückwirkung und ein zweites Berechnungsmodul (9) für den vom Radaktuator (4) einzustellenden Lenkwinkel aufweisen, und beiden Berechnungsmodulen (8, 9) oder zumindest dem zweiten Berechnungsmodul (9) eine den Lenkbefehl repräsentierende Größe (φ_{L}) als Eingangsgröße aufgeschaltet ist, und
eine Einrichtung zur Bestimmung der Querbeschleunigung (a) am Fahrzeug,
wobei die Steuerungsmittel (6) derart konfiguriert sind, die Querbeschleunigung (a) unmittelbar in ein Feedbackmoment (Sₐ) umzurechnen, indem mittels einer mathematische Funktion jedem Wert aus dem Definitionsbereich, nämlich einer Querbeschleunigung, eine Wert aus dem Wertebereich, nämlich ein Feedbackmoment (Sa) eindeutig zuordnet wird, und dieses Feedbackmoment (Sₐ) in dem ersten Berechnungsmodul (8), ganz oder mit einem Skalierungsfaktor größer 0 und kleiner als 1, als Summand in ein die Lenkungsrückwirkung repräsentierendes Sollmoment (S_{H}) des Haptikaktuators (3) einzubeziehen,
**dadurch gekennzeichnet, dass**
das zweite Berechnungsmodul (8) ein zusätzliches Feedbackmoment (S_{d}) generiert, welches in dem ersten Berechnungsmodul (9) mit einem Skalierungsfaktor zwischen 0 und 1 als Summand in das Sollmoment (S_{H}) des Haptikaktuators (3) eingeht, wobei das zusätzliche Feedbackmoment (S_{d}) auf dem Ausgangssignal eines Reglers (14) basiert und diesem Regler (14) als Eingangsgrößen eine den Lenkbefehl des Fahrers repräsentierende Größe (φL) und eine korrespondierende, die Stellung des Radaktuators (4) und damit den Lenkwinkel der Fahrzeugräder 5 repräsentierende Größe (φR) als auszuregelnde Differenz aufgeschaltet sind.

2. Steer-by-wire-Lenkung (1) nach Anspruch 1, **dadurch gekennzeichnet, dass** das Feedbackmoment (Sₐ) aus der Querbeschleunigung mittels einer Kennlinie gewonnen wird, welche eine mathematische Funktion ist, die jedem Wert aus dem Definitionsbereich, nämlich einer Querbeschleunigung, einen Wert aus dem Wertebereich, nämlich ein Feedbackmoment (Sₐ) eindeutig zuordnet.

3. Steer-by-wire-Lenkung (1) nach Anspruch 1 oder 2, **dadurch gekennzeichnet, dass** das Feedbackmoment (Sₐ) aus der Querbeschleunigung anteilig in dem ersten Berechnungsmodul (8) in das Sollmoment (S_{H}) des Haptikaktuators (3) und in dem zweiten Berechnungsmodul (9) in die Bestimmung einer Stellgröße des Radaktuators (4) eingeht und ein Feedback des Radaktuators (4) in die Ermittlung des Sollmoments (S_{H}) des Haptikaktuators (3) eingeht.

4. Steer-by-wire-Lenkung (1) nach Anspruch 1 oder 2, **dadurch gekennzeichnet, dass** das Feedbackmoment (Sₐ) aus der Querbeschleunigung hälftig in dem ersten Berechnungsmodul (8) in das Sollmoment (S_{H}) des Haptikaktuators (3) und in dem zweiten Berechnungsmodul (9) in die Bestimmung einer Stellgröße des Radaktuators (4) eingeht und ein Feedback des Radaktuators (4) in die Ermittlung des Sollmoments (S_{H}) des Haptikaktuators (3) eingeht.

5. Steer-by-wire-Lenkung (1) nach einem der Ansprüche 1 bis 4, **dadurch gekennzeichnet, dass** ein Rückstellmoment (S_{b}) zur aktiven Rückstellung der Lenkung in eine Neutralstellung der Lenkungshandhabe (2) entsprechend Geradeausfahrt anteilig in dem ersten Berechnungsmodul (8) in das Sollmoment (S_{H}) des Haptikaktuators (3) und in dem zweiten Berechnungsmodul (9) in die Bestimmung einer Stellgröße des Radaktuators (4) eingeht.

6. Steer-by-wire-Lenkung (1) nach einem der Ansprüche 1 bis 4, **dadurch gekennzeichnet, dass** ein Rückstellmoment (S_{b}) zur aktiven Rückstellung der Lenkung in eine Neutralstellung der Lenkungshandhabe (2) entsprechend Geradeausfahrt hälftig in dem ersten Berechnungsmodul (8) in das Sollmoment (S_{H}) des Haptikaktuators (3) und in dem zweiten Berechnungsmodul (9) in die Bestimmung einer Stellgröße des Radaktuators (4) eingeht.

7. Steer-by-wire-Lenkung (1) nach einem der Ansprüche 1 bis 6, **dadurch gekennzeichnet, dass** die Steuerungsmittel (6) umfassen:
einen Regler (14), dem als Eingangsgrößen ein Lenkradwinkel und eine den Lenkwinkel der Fahrzeugräder (5) repräsentierende Größe, insbesondere Stellungsgröße des Radaktuators (4), aufgeschaltet sind, und der als Ausgangsgröße ein zusätzliches Feedbackmoment (S_{b}) als Basis für eine Stellgrößenkomponente (S_{R1}) für den Radaktuator (4) generiert,
einen Summierer (13), welcher einen Anteil des Feedbackmoments (Sₐ) aus der Querbeschleunigung und das zusätzliche Feedbackmoment (S_{d}) zu dem Sollmoment (S_{H}) für den Haptikaktuator (3) addiert,
einen Invertierer (16) zur Invertierung des zusätzlichen Feedbackmoments (Sₐ) aus dem Regler (14), sowie einen diesem nachfolgenden Summierer (22), welcher den verbleibenden Anteil des Feedbackmoments (Sₐ) aus der Querbeschleunigung und das invertierte zusätzliche Feedbackmoment (S_{d}) zu einem weiteren Sollmoment addiert, welches Grundlage für die Stellgrößenkomponente (S_{R1}) des Radaktuators (4) ist.

8. Steer-by-wire-Lenkung (1) nach Anspruch 7, **dadurch gekennzeichnet, dass** die Steuerungsmittel (6) eine Vorsteuerung (17) für den Radaktuator (4) auf Grundlage des Lenkradwinkels und der den Lenkwinkel der Fahrzeugräder (5) repräsentierende Größe, welche eine zusätzliche Komponente der Stellgröße (S_{R2}) des Radaktuators (4) ist, umfassen.

9. Steer-by-wire-Lenkung (1) nach einem der Ansprüche 1 bis 8, **dadurch gekennzeichnet, dass** in das Sollmoment (S_{H}) des Haptikaktuators (3) als weiterer Summand ein Moment eingeht, welches aus einer den Lenkbefehl repräsentierenden Größe (φ_{L}) gewonnen ist.

10. Steer-by-wire-Lenkung (1) nach einem der Ansprüche 1 bis 9, **dadurch gekennzeichnet, dass** in das Sollmoment (S_{H}) des Haptikaktuators (3) als weiterer Summand ein Rückstellmoment zur aktiven Rückstellung der Lenkungshandhabe (2) in eine Neutralstellung eingeht.

11. Steer-by-wire-Lenkung (1) nach einem der Ansprüche 1 bis 10, **dadurch gekennzeichnet, dass** zur Erfassung der Querbeschleunigung ein Querbeschleunigungssensor (7) vorgesehen ist, welcher am Radaktuator (4) oder am Fahrzeugaufbau im Bereich des Vorderwagens angeordnet ist.

## Claims

1. Steer-by-wire steering system (1) for a motor vehicle, comprising
a steering handle (2) for inputting a steering command by a driver of the motor vehicle,
a haptic actuator (3), which is mechanically coupled to the steering handle (2), for simulating a steering reaction for the driver at the steering handle (2), a wheel actuator (4) for setting a steering angle at steerable vehicle wheels (5) of the motor vehicle,
control means (6) configured on the basis of the driver-side steering command to cause the wheel actuator (4) to effect a steering operation of the vehicle wheels (5) and to cause the haptic actuator (3) to generate a steering reaction, the control means (6) comprising a first calculation module (8) for the steering reaction provided by the haptic actuator (3) and a second calculation module (9) for the steering angle to be set by the wheel actuator (4), and a variable (φL) representing the steering command being connected as an input variable to both calculation modules (8, 9) or at least to the second calculation module (9), and
a device for determining the lateral acceleration (a) on the vehicle, the control means (6) being configured to convert the lateral acceleration (a) directly into a feedback torque (Sₐ) by uniquely assigning a value from the value range, namely a feedback torque (Sₐ), to each value from the definition range, namely a lateral acceleration, by means of a mathematical function, and to incorporate this feedback torque (Sₐ) in the first calculation module (8), completely or with a scaling factor greater than 0 and less than 1, as a summand in a setpoint torque (S_{H}) of the haptic actuator (3) representing the steering reaction,
**characterized in that**
the second calculation module (8) generates an additional feedback torque (S_{d}), which is used in the first calculation module (9) with a scaling factor between 0 and 1 as a summand in the setpoint torque (S_{H}) of the haptic actuator (3), the additional feedback torque (S_{d}) being based on the output signal of a controller (14) and a variable (φL) representing the steering command from the driver and a corresponding variable (φR) representing the position of the wheel actuator (4) and thus the steering angle of the vehicle wheels 5 being connected to this controller (14) as input variables as a difference to be corrected.

2. Steer-by-wire steering system (1) according to claim 1, **characterized in that** the feedback torque (Sₐ) is obtained from the lateral acceleration by means of a characteristic curve, which is a mathematical function that uniquely assigns a value from the value range, namely a feedback torque (Sₐ), to each value from the definition range, namely a lateral acceleration.

3. Steer-by-wire steering system (1) according to either claim 1 or claim 2, **characterized in that** the feedback torque (Sₐ) from the lateral acceleration is used proportionally in the first calculation module (8) in the setpoint torque (S_{H}) of the haptic actuator (3) and in the second calculation module (9) to determine a manipulated variable of the wheel actuator (4) and feedback from the wheel actuator (4) is used to determine the setpoint torque (S_{H}) of the haptic actuator (3).

4. Steer-by-wire steering system (1) according to either claim 1 or claim 2, **characterized in that** the feedback torque (Sₐ) from the lateral acceleration is used half in the first calculation module (8) in the setpoint torque (S_{H}) of the haptic actuator (3) and half in the second calculation module (9) to determine a manipulated variable of the wheel actuator (4) and feedback from the wheel actuator (4) is used to determine the setpoint torque (S_{H}) of the haptic actuator (3).

5. Steer-by-wire steering system (1) according to any of claims 1 to 4, **characterized in that** a return torque (S_{b}) for actively returning the steering to a neutral position of the steering handle (2) corresponding to straight-ahead driving is used proportionally in the first calculation module (8) in the setpoint torque (S_{H}) of the haptic actuator (3) and in the second calculation module (9) to determine a manipulated variable of the wheel actuator (4).

6. Steer-by-wire steering system (1) according to any of claims 1 to 4, **characterized in that** a return torque (S_{b}) for actively returning the steering to a neutral position of the steering handle (2) corresponding to straight-ahead driving is used half in the first calculation module (8) in the setpoint torque (S_{H}) of the haptic actuator (3) and half in the second calculation module (9) to determine a manipulated variable of the wheel actuator (4).

7. Steer-by-wire steering system (1) according to any of claims 1 to 6, **characterized in that** the control means (6) comprise:
a controller (14) to which a steering wheel angle and a variable representing the steering angle of the vehicle wheels (5), in particular a position variable of the wheel actuator (4), are connected as input variables, and which generates an additional feedback torque (S_{b}) as an output variable as the basis for a manipulated variable component (S_{R1}) for the wheel actuator (4),
a summer (13) which adds a portion of the feedback torque (Sₐ) from the lateral acceleration and the additional feedback torque (S_{d}) to the setpoint torque (S_{H}) for the haptic actuator (3),
an inverter (16) for inverting the additional feedback torque (S_{d}) from the controller (14), as well as a summer (22) following this, which adds the remaining portion of the feedback torque (Sₐ) from the lateral acceleration and the inverted additional feedback torque (S_{d}) to a further setpoint torque, which is the basis for the manipulated variable component (S_{R1}) of the wheel actuator (4).

8. Steer-by-wire steering system (1) according to claim 7, **characterized in that** the control means (6) comprise a pilot control (17) for the wheel actuator (4) on the basis of the steering wheel angle and the variable representing the steering angle of the vehicle wheels (5), which is an additional component of the manipulated variable (S_{R2}) of the wheel actuator (4).

9. Steer-by-wire steering system (1) according to any of claims 1 to 8, **characterized in that** the setpoint torque (S_{H}) of the haptic actuator (3) uses a torque obtained from a variable representing the steering command (φL) as a further summand.

10. Steer-by-wire steering system (1) according to any of claims 1 to 9, **characterized in that** a return torque for actively returning the steering handle (2) to a neutral position is used in the setpoint torque (S_{H}) of the haptic actuator (3) as a further summand.

11. Steer-by-wire steering system (1) according to any of claims 1 to 10, **characterized in that** a lateral acceleration sensor (7) is provided for detecting the lateral acceleration, which sensor is arranged on the wheel actuator (4) or on the vehicle body in the region of the front of the vehicle.

## Revendications

1. Direction à commande électrique (1) pour un véhicule automobile, comprenant
une manette de direction (2) pour l'entrée d'une instruction de direction par un conducteur du véhicule automobile,
un actionneur haptique (3), qui est accouplé mécaniquement à la manette de direction (2), pour simuler une rétroaction de direction pour le conducteur sur la manette de direction (2), un actionneur de roue (4) pour régler un angle de braquage sur des roues de véhicule directrices (5) du véhicule automobile,
des moyens de commande (6) qui sont conçus de manière à amener l'actionneur de roue (4) à provoquer un actionnement de direction des roues de véhicule (5) et à amener l'actionneur haptique (3) à produire une rétroaction de direction en fonction de l'instruction de direction donnée par le conducteur, dans laquelle les moyens de commande (6) présentent un premier module de calcul (8) pour la rétroaction de direction fournie par l'actionneur haptique (3) et un second module de calcul (9) pour l'angle de braquage à régler par l'actionneur de roue (4), et une grandeur (φL) représentant l'instruction de direction est appliquée comme grandeur d'entrée aux deux modules de calcul (8, 9) ou au moins au second module de calcul (9), et
un dispositif pour la détermination de l'accélération transversale (a) sur le véhicule, dans laquelle les moyens de commande (6) sont conçus de telle sorte qu'ils convertissent directement l'accélération transversale (a) en un couple de rétroaction (Sₐ) en attribuant de manière univoque, au moyen d'une fonction mathématique, à chaque valeur de la plage de définition, à savoir une accélération transversale, une valeur de la plage de valeurs, à savoir un couple de rétroaction (Sₐ), et en intégrant ledit couple de rétroaction (Sₐ) dans le premier module de calcul (8), entièrement ou avec un facteur d'échelle supérieur à 0 et inférieur à 1, en tant que terme de somme dans un couple de consigne (S_{H}) de l'actionneur haptique (3) représentant la rétroaction de direction,
**caractérisée en ce que**
le second module de calcul (8) génère un couple de rétroaction supplémentaire (S_{d}) qui, dans le premier module de calcul (9), entre dans le couple de consigne (S_{H}) de l'actionneur haptique (3) en tant que terme de somme avec un facteur d'échelle compris entre 0 et 1, dans laquelle le couple de rétroaction supplémentaire (S_{d}) est basé sur le signal de sortie d'un régulateur (14) et une grandeur (φL) représentant l'instruction de direction du conducteur et une grandeur (φR) correspondante représentant le réglage de l'actionneur de roue (4) et donc l'angle de braquage des roues de véhicule 5 sont appliquées audit régulateur (14) comme grandeurs d'entrée en tant que différence à réguler.

2. Direction à commande électrique (1) selon la revendication 1, **caractérisée en ce que** le couple de rétroaction (Sₐ) est obtenu à partir de l'accélération transversale au moyen d'une courbe caractéristique, qui est une fonction mathématique qui associe de manière univoque à chaque valeur de la plage de définition, à savoir une accélération transversale, une valeur de la plage de valeurs, à savoir un couple de rétroaction (Sₐ).

3. Direction à commande électrique (1) selon la revendication 1 ou 2, **caractérisée en ce que** le couple de rétroaction (Sₐ) provenant de l'accélération transversale est intégré proportionnellement dans le couple de consigne (S_{H}) de l'actionneur haptique (3) dans le premier module de calcul (8) et dans la détermination d'une grandeur de réglage de l'actionneur de roue (4) dans le second module de calcul (9), et une rétroaction de l'actionneur de roue (4) est intégrée dans la détermination du couple de consigne (S_{H}) de l'actionneur haptique (3).

4. Direction à commande électrique (1) selon la revendication 1 ou 2, **caractérisée en ce que** le couple de rétroaction (Sₐ) provenant de l'accélération transversale est intégré pour moitié dans le couple de consigne (S_{H}) de l'actionneur haptique (3) dans le premier module de calcul (8) et dans la détermination d'une grandeur de réglage de l'actionneur de roue (4) dans le second module de calcul (9), et une rétroaction de l'actionneur de roue (4) est intégrée dans la détermination du couple de consigne (S_{H}) de l'actionneur haptique (3).

5. Direction à commande électrique (1) selon l'une des revendications 1 à 4, **caractérisée en ce qu'un** couple de rappel (S_{b}) pour le rappel actif de la direction dans une position neutre de la manette de direction (2) correspondant à une marche en ligne droite est intégré proportionnellement dans le premier module de calcul (8) dans le couple de consigne (S_{H}) de l'actionneur haptique (3) et dans le second module de calcul (9) dans la détermination d'une grandeur de réglage de l'actionneur de roue (4).

6. Direction à commande électrique (1) selon l'une des revendications 1 à 4, **caractérisée en ce qu'un** couple de rappel (S_{b}) pour le rappel actif de la direction dans une position neutre de la manette de direction (2) correspondant à une marche en ligne droite est intégré pour moitié dans le premier module de calcul (8) dans le couple de consigne (S_{H}) de l'actionneur haptique (3) et dans le second module de calcul (9) dans la détermination d'une grandeur de réglage de l'actionneur de roue (4).

7. Direction à commande électrique (1) selon l'une des revendications 1 à 6, **caractérisée en ce que** les moyens de commande (6) comprennent :
un régulateur (14) auquel sont appliqués, en tant que grandeurs d'entrée, un angle de braquage et une grandeur représentant l'angle de braquage des roues de véhicule (5), en particulier une grandeur de réglage de l'actionneur de roue (4), et qui génère, en tant que grandeur de sortie, un couple de rétroaction supplémentaire (S_{b}) servant de base à une composante de grandeur de réglage (S_{R1}) pour l'actionneur de roue (4),
un additionneur (13) qui additionne une proportion du couple de rétroaction (Sₐ) provenant de l'accélération transversale et le couple de rétroaction supplémentaire (S_{d}) au couple de consigne (S_{H}) pour l'actionneur haptique (3),
un inverseur (16) pour inverser le couple de rétroaction supplémentaire (S_{d}) provenant du régulateur (14), ainsi qu'un additionneur (22) faisant suite à celui-ci, qui additionne la proportion restante du couple de rétroaction (Sₐ) provenant de l'accélération transversale et le couple de rétroaction supplémentaire (S_{d}) inversé pour obtenir un autre couple de consigne, qui sert de base pour la composante de grandeur de réglage (S_{R1}) de l'actionneur de roue (4).

8. Direction à commande électrique (1) selon la revendication 7, **caractérisée en ce que** les moyens de commande (6) comprennent une commande pilote (17) pour l'actionneur de roue (4) sur la base de l'angle de braquage et de la grandeur représentant l'angle de braquage des roues de véhicule (5), qui est une composante supplémentaire de la grandeur de réglage (S_{R2}) de l'actionneur de roue (4).

9. Direction à commande électrique (1) selon l'une des revendications 1 à 8, **caractérisée en ce que,** dans le couple de consigne (S_{H}) de l'actionneur haptique (3), est intégré en tant qu'autre terme de somme un couple qui est obtenu à partir d'une grandeur (φ_{L}) représentant l'instruction de direction.

10. Direction à commande électrique (1) selon l'une des revendications 1 à 9, **caractérisée en ce que** dans le couple de consigne (S_{H}) de l'actionneur haptique (3), un couple de rappel pour le rappel actif de la manette de direction (2) dans une position neutre est intégré en tant qu'autre terme de somme.

11. Direction à commande électrique (1) selon l'une des revendications 1 à 10, **caractérisée en ce que,** pour détecter l'accélération transversale, il est prévu un capteur d'accélération transversale (7) qui est agencé sur l'actionneur de roue (4) ou sur la carrosserie de véhicule dans la zone de l'avant-train.
